# EUROPÄISCHE PATENTSCHRIFT

(11) **EP 3 104 687 B1**
(45) Veröffentlichungstag und Bekanntmachung des Hinweises auf die Patenterteilung: **29.05.2019**
(21) Anmeldenummer: 15703594.0
(22) Anmeldetag: 10.02.2015
(51) Int. Cl.: A01J 5/08

(54) **ZITZENGUMMI**
TEAT CUP LINER
MANCHON TRAYEUR

(30) Priorität: 10.02.2014 DE 102014101615
(43) Veröffentlichungstag der Anmeldung: 21.12.2016
(73) Patentinhaber: INRAD Technologies B.V., 6605 WD Wijchen (NL)
(72) Erfinder: HAPPEL, Werner, 87654 Friesenried (DE)
(74) Vertreter: Winter, Brandl, Fürniss, Hübner, Röss, Kaiser, Polte - Partnerschaft mbB
(86) Internationale Anmeldenummer: PCT/EP2015/052758
(87) Internationale Veröffentlichungsnummer: WO 2015/118168

(56) Entgegenhaltungen:
- AU-B2- 468 122
- GB-A- 284 236
- US-A- 1 786 786

## Beschreibung

Die Erfindung betrifft einen Zitzengummi.

Beim maschinellen Melken ist eine schonende Zitzenbehandlung von entscheidender Bedeutung, Eine derartige schonende Zitzenbehandlung ist beispielsweise bei Melksystemen gewährleistet, bei denen eine Vakuumentlastung in der Massagephase erfolgt, wie es auch beim natürlichen Kalbsaugen der Fall ist. Durch diese Vakuumentlastung wird die Zitzenkondition nachweisbar positiv beeinflusst.

In der GB 284 236 A ist ein Zitzenbecher mit Schlauchteil offenbart, welcher abwechselnd mit Vakuum beaufschlagt und entlastet wird. Ein Zitzengummikopf verformt sich dadurch, was eine Handmassage simuliert.

Die AU 468 122 B2 offenbart einen Melkbecher mit Zitzengummikopf mit einer Wand um eine Öffnung, welche mit einer innenseitigen, ringförmigen Lippe ausgestattet ist, die Abhängig von der Öffnung zu einem flexiblen Außenbereich formbar ist, welcher so abgedichtet wird, dass eine Vakuumkammer entsteht, Die Kammer kann abwechselnd mit Vakuum beaufschlagt und entlastet werden, so dass der Kopfraum kollabiert. Dies führt zu einer massageähnlich Funktion.

Ein Melkbecher mit Zitzengummikopf ist ebenfalls in der US 1 786 786 A offenbart. Durch einen Pulsator wird der Zitzengummikopf abwechselnd mit einem Vakuum beaufschlagt und entlastet, was den Zitzengummikopf kollabieren lässt um eine Massagefunktion zu erreichen.

Ein vakuumentlastendes Melksystem ist beispielsweise in der EP 1 119 235 B1 offenbart. Bei diesen Melksystemen werden Zitzengummis verwendet, die in an sich bekannter Weise einen Zitzengummikopf mit einem sich daran anschließenden Schlauchteil zur Aufnahme der Zitze aufweisen. In einem von dem

Schlauchteil umgriffenen Innenraum mündet ein durch einen Schrägabschluss gebildeter Vakuumanschluss, an dem das Melkvakuum anliegt. Der Vakuumanschluss ist als Schrägabschluss des Zitzengummis ausgebildet, In einem zum Schrägabschluss benachbarten Abschnitt des Schlauchteils ist ein Dünnwandbereich ausgebildet. Dieser Zitzengummi ist in einen Melkbecher eingespannt, wobei ein vom Schlauchteil begrenzter Ringraum über eine Pulsatorsteuerung abwechselnd mit Vakuum, Atmosphäre oder Überdruck beaufschlagbar ist. Auf diese Weise kann durch das Steuern der Druckdifferenz zwischen dem Schlauchtell-Innenraum und dem außen liegenden Ringraum die Massagephase gesteuert werden, wobei sich dann der Dünnwandbereich einfaltet und den Schrägabschluss gegenüber dem Vakuum absperrt. Hinsichtlich weiterer Details dieses Melksystems ist auf die oben genannte Patentschrift verwiesen.

Der Milchtransport zu einem mit den Melkbechern/Zitzengummls verbundenen Sammelstück lässt sich weiter verbessern, wenn im Zitzengummi ein Belüftungskanal gemäß der DE 10 2006 026 271 A1 und den zugehörigen Zusatzanmeldungen DE 10 2007 053 230 A1 und DE 10 2006 040 079 A1 ausgebildet ist. Dabei kann im Zitzengummikopf eine Kopfdüse vorgesehen werden, über die der Luftstrom durch den Belüftungskanal gesteuert wird, so dass ein andauerndes Vakuum im Kopfraum des Zitzengummis verhindert werden kann.

Selbst bei diesen sehr schonenden Melkverfahren kann es vorkommen, dass nach dem Melken eine sichtbare Schwellung, beispielsweise eine tastbare, für das Tier schmerzbare Ringwulst zu beobachten ist. Diese störende Zitzenveränderung ist nach Melkzeugabnahme sichtbar und kann u.a. aufgrund eines zu hohen Kopfvakuums bei zu groß gewähltem Zitzengummi auftreten. Falls man den Zitzengummi zu klein wählt, kann es zu Abschnürungen kommen.

Zur Vermeidung derartiger Zitzenveränderungen ist daher erforderlich, dass die Zitzen von der Bedienperson nach der Melkzeugabnahme geprüft werden, so dass rechtzeitig durch Änderung der Melkparameter oder der Zitzengummigröße reagiert werden kann. Diese Prüfung bedarf jedoch einer großen Erfahrung.

In der EP 1 152 655 B1 wird ein automatisiertes Messverfahren beschrieben, bei denen mit Hohlnadeln ausgeführte Sensoren an unterschiedlichen Messstellen der milchführenden Leitung einer Melkanlage eingesetzt werden, um über eine Differenzdruckmessung das Vakuum oder Vakuumschwankungen zu erfassen. U.a. ist auch vorgesehen, einen derartigen Drucksensor in den Kopfraum einzuführen, so dass ein zu hohes Kopfvakuum erfassbar ist. Das Kopfvakuum liegt bei den zitzenschonenden Melksystemen im Bereich unter 20 kPa, die oben genannten Zitzenänderungen treten üblicherweise bei einem Kopfvakuum auf, das größer als 20 bis 30 kPa ist.

Nachteilig bei dieser Lösung ist, dass ein erheblicher regelungs- und vorrichtungstechnischer Aufwand erforderlich ist, um das Messsystem zu installieren und auszuwerten.

Demgegenüber liegt der Erfindung die Aufgabe zugrunde, einen Zitzengummi zu schaffen, mit dem ein den Melkablauf störendes zu hohes Kopfvakuum auf einfache Weise erfassbar ist.

Diese Aufgabe wird durch einen Zitzengummi mit den Merkmalen des Patentanspruchs 1 gelöst.

Vorteilhafte Weiterbildungen sind Gegenstand der Unteransprüche.

Der erfindungsgemäße Zitzengummi hat ein Schlauchteil mit einem Zitzengummikopf, der einen Kopfraum begrenzt. Erfindungsgemäß ist in dem Zitzengummikopf eine Einrichtung integriert, die derart ausgebildet ist, dass sie bei Überschreiten eines Grenzwertes des Kopfvakuums eine von außen erfassbare strukturelle Änderung erfährt, die von der Bedienperson bereits während des Melkens erfasst werden kann, so dass sie entsprechende Maßnahmen einleiten kann, um ein das Melkverfahren störendes zu hohes Kopfvakuum und die damit einhergehenden für das Tier schmerzhaften Zitzenveränderungen zu vermeiden.

Unter dem Begriff "von außen" wird insbesondere verstanden, dass die strukturelle Änderung von der Bedienperson visuell, durch Tasten oder auf sonstige Weise beim Bedienen der Melkanlage, insbesondere des Melkzeugs erkannt werden kann.

Diese strukturelle Änderung der Einrichtung kann beispielsweise so ausgeführt sein, dass sie visuell oder durch Tasten erfassbar ist. Die Bedienperson kann dann sozusagen "auf einen Blick" oder durch Fühlen erkennen, ob sich das Kopfvakuum in vorbestimmten Bereich befindet oder nicht.

Erfindungsgemäß ist die Einrichtung mit einer Membran ausgeführt, die sich bei zu hohem Kopfvakuum einwölbt. Eine derartige Einwölbung ist äußerst einfach erfassbar. Besonders vorteilhaft ist dabei, dass sich die Membran bei Einstellung des richtigen Kopfvakuums wieder auswölbt, so dass sich die Bedienperson auch von der korrekten Einstellung überzeugen kann.

Eine derartige membranartige Einrichtung ist einstückig am Zitzengummikopf ausgebildet oder als gesondertes Bauteil in den Zitzengummikopf eingesetzt.

Bei einem nicht erfindungsgemäßen anderen Ausführungsbeispiel ist diese eine strukturelle Änderung erfahrende Einrichtung als Balg- oder Federelement ausgebildet, das mit dem Kopfvakuum beaufschlagt ist und bei Überschreiten des Kopfvakuums, das heißt bei zu hohem Vakuum im Kopfraum seine Axiallänge ändert, vorzugsweise verkürzt, so dass auch diese Änderung auf einfache Weise erfassbar ist.

Die Einrichtung kann im Bereich des größten Zitzengummikopfdurchmessers oder etwas zum Schlauchteil hin versetzt an der Außenkontur des Zitzengummikopfs angeordnet sein.

Dabei wird es bevorzugt, wenn die Einrichtung über diese Außenkontur vorsteht, so dass die Erfassung des Kopfvakuums vereinfacht ist.

Bei den eingangs genannten Melksystemen, bei denen im Zitzengummi zur Optimierung des Milchkanals ein Belüftungskanal vorgesehen ist und die Entstehung eines andauernden Vakuums im Kopfraum über eine Kopfdüse verhindert wird, kann auch diese Kopfdüse so ausgebildet werden, dass diese bei einem Verstopfen ebenfalls in irgendeiner Weise deformiert wird, so dass zum einen das Verstopfen und zum anderen auch das überhöhte Kopfvakuum angezeigt werden kann.

Bevorzugte Ausführungsbeispiele der Erfindung werden im Folgenden anhand schematischer Zeichnungen näher erläutert. Es zeigen:
Figur 1 eine dreidimensionale Ansicht eines Ausführungsbeispiels eines erfindungsgemäßen Zitzengummis;
Figuren 2 und 3 einen Längsschnitt durch einen Zitzengummikopf des Zitzengummis aus Figur 1;
Figuren 4 und 5 einen entsprechenden Längsschnitt durch ein zweites Ausführungsbeispiel eines erfindungsgemäßen Zitzengummikopfs und
Figuren 6 und 7 einen Längsschnitt durch einen Zitzengummikopf eines dritten, nicht erfindungsgemäßen Ausführungsbeispiels.

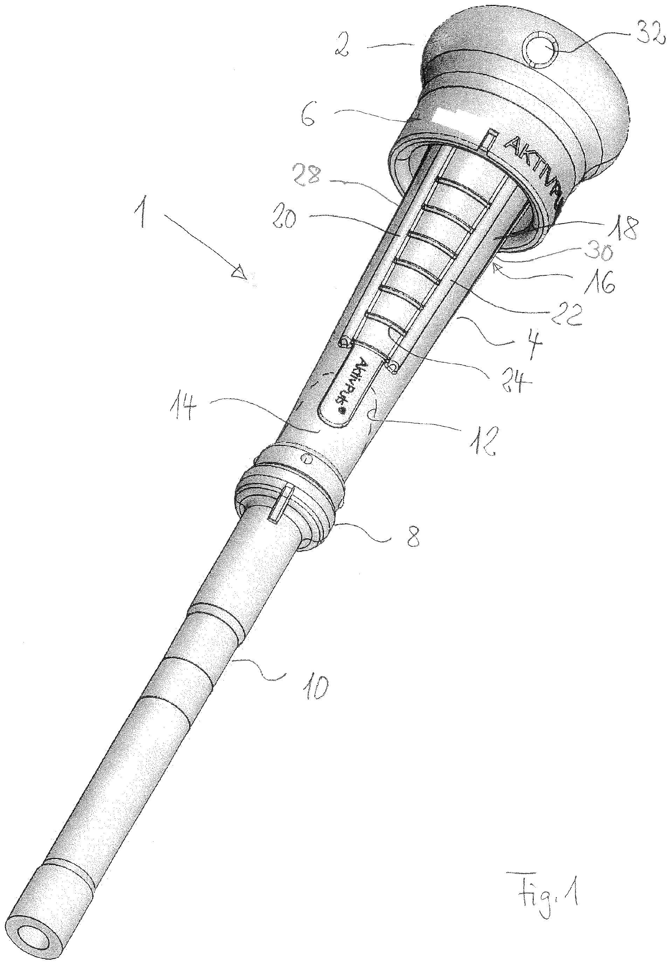

Figur 1 zeigt eine Darstellung eines Zitzengummis 1 eines Melkzeugs, der in einen nicht dargestellten Melkbecher eingespannt ist. Hinsichtlich des prinzipiellen Aufbaus eines derartigen Melkzeugs sei auf den eingangs beschriebenen Stand der Technik verwiesen. Bei einem derartigen so genannten Zweiraummelkbecher liegt im Saugtakt an der Zitze das Melkvakuum an, so dass Milch von der Zitze durch den Zitzengummi 1 hindurch und einem Milchschlauch zu einem Sammelstück abströmen kann. Im Massagetakt wird durch Einlass von Atmosphäre oder Überdruck in den eingangs genannten Ringraum zwischen dem Außenumfang des Zitzengummis 1 und einer Innenumfangswandung des Melkbechers der Zitzengummi 1 eingefaltet (Kollabieren), so dass das Blut von der Zitzenspitze zur Zitzenbasis zurückmassiert wird.

Der in Figur 1 dargestellte Zitzengummi 1 hat einen Zitzengummikopf 2, der in ein Schlauchteil 4 übergeht. Am Zitzengummikopf 2 ist eine Kopfmuffe 6 ausgebildet, die abschnittsweise mit dem zitzengummikopfseitigen Endabschnitt des Schlauchteils 4 überlappt und einen Ringraum bildet, in den ein Endabschnitt eines nicht dargestellten Melkbechers eintaucht. Der andere Endabschnitt des Melkbechers greift an einer Spannwulst 8 des Schlauchteils 4 an, so dass der Zitzengummi 1 in den Melkbecher eingespannt ist. Dieser hat einen Anschluss, über den der genannte Ringraum zwischen dem Schlauchteil 4 und dem Melkbecher über eine Pulsatorsteuerung mit Vakuum, Atmosphäre oder Überdruck verbindbar ist. Beim dargestellten Ausführungsbeispiel schließt sich an die Spannwulst 8 ein integrierter Milchschlauch 10 an, der an ein Sammelstück angesetzt wird.

Das Schlauchteil 4 ist konisch ausgebildet, wobei der Durchmesser vom Zitzengummikopf 2 weg hin zur Spannwulst 8 abnimmt.

Das Schlauchteil 4 umgreift einen Zitzenaufnahmeraum, in den die Zitze des zu melkenden Tiers durch den Zitzengummikopf 2 hindurch eingeführt wird. Die Zitze erstreckt sich dabei jedoch lediglich entlang eines Teils der Axiallänge des Schlauchteils 4, so dass unterhalb dieses Zitzenaufnahmeraums ein Innenraum des Schlauchteils 4 verbleibt, der nicht durch die Zitze ausgefüllt ist. In diesem Bereich ist ein in Figur 1 gestrichelt dargestellter Schrägabschluss 12 ausgebildet, der mittels eines Schlauchteilabschnittes, im Folgenden Dünnwandbereich 14, beim Massagetakt verschlossen werden kann, so dass der Innenraum gegenüber dem Vakuum abgesperrt ist. Die Wandungsstärke des Dünnwandbereiches 14 ist im Hinblick auf das optimale Einfalten / Einfallen ausgelegt. Einzelheiten hierzu sind im Stand der Technik erläutert.

Der dargestellte Zitzengummi 1 ist des Weiteren mit dem eingangs beschriebenen Belüftungskanal und der nicht dargestellten Kopfdüse ausgebildet, um ein übermäßiges Vakuum im Zitzengummikopfbereich zu vermeiden.

Erfindungsgemäß ist der die Zitze umgreifende Bereich des Schlauchteils 4 mit unterschiedlichen Wandstärken ausgeführt. In Figur 1 hinten liegend ist eine mit vergleichsweise großer Wandstärke ausgeführte Schlauchteilrückwand - im Folgenden Rückwand 16 genannt - vorgesehen, die sich mit einer mit vergleichsweise geringer Wandstärke ausgeführten Massagewandung 18 zum Schlauchteil 4 ergänzt. Mit anderen Worten gesagt, der Umfangsbereich des Schlauchteils 4 ist durch die Rückwand 16 und die dünnwandige Massagewandung 18 gebildet.

Zur Steuerung und Kontrolle der Massagebewegung ist die Massagewandung 18 mit zwei Stabilisierungsleisten 20, 22 ausgebildet, die in der Ansicht gemäß Figur 1 etwa V-förmig zu einander angestellt sind und im Abstand oberhalb des Schrägabschlusses 12 enden. Dieser Abstand kann beispielsweise 5 bis 15 mm betragen. Der Querabstand der beiden Stabilisierungsleisten 20, 22 verringert sich hin zu dem Schrägabschluss 12. Wie in Figur 1 erkennbar, erstrecken sich die Massagewandung 18 und die dazugehörigen Stabilisierungsleisten 20, 22 in Axialrichtung gesehen in den Überlappungsbereich mit der Kopfmuffe 6 hinein.

Die beiden V-förmig zu einander angeordneten Stabilisierungsleisten 20, 22 sind über eine Vielzahl von Querrippen 24 verbunden, wobei der Abstand zwischen den Querrippen 24 im Wesentlichen gleich ist. Aufgrund der V-förmigen Anstellung verlängern sich die Querrippen 24 hin zum Zitzengummikopf. Wie erläutert, ist durch diese leiter- oder gliederkettenartige Anordnung der Stabilisierungskontur (Stabilisierungsleisten 20, 22 und Querrippen 24) eine definierte Längs- und Querverformung der Massagewandung 18 gewährleistet.

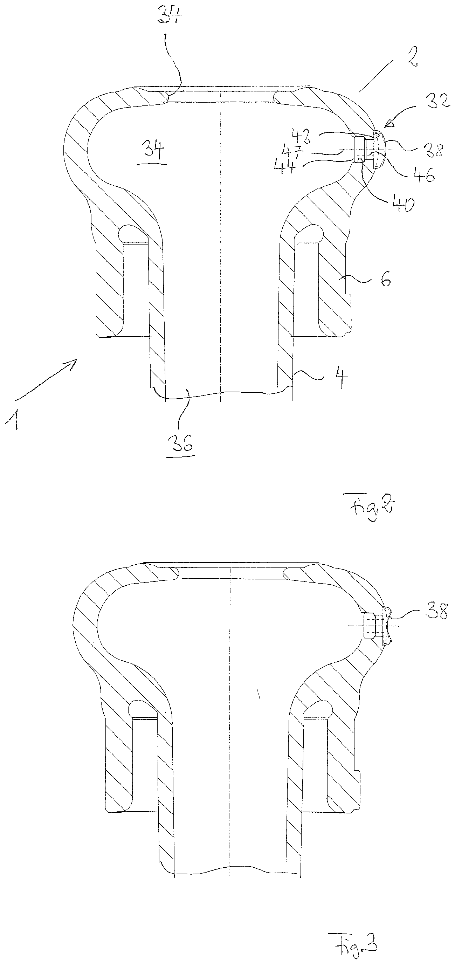

Die Rückwand 16 umgreift im Bereich des Zitzengummikopfes 2 etwa 180° des Umfangs des Schlauchteils 4. Im Bereich der Spannwulst 8 verringert sich dieser Umfangsanteil etwas, so dass sich der Abstand zu der in Figur 3 eingezeichneten Vertikalebene 26 zur Spannwulst 8 hin vergrößert. Der Übergang zur dünnwandigen Massagewandung 18 erfolgt über zwei Rückwandkanten 28, 30.

Gemäß der Darstellung in Figur 1 ist im Bereich des größten Durchmessers des Zitzengummikopfs 2 eine Einrichtung 32 zur Erfassung des Kopfvakuums vorgesehen.

Figur 2 zeigt einen Schnitt durch den Zitzengummikopf 2 des Zitzengummis 1 aus Figur 1. In dieser Schnittdarstellung ist ein vom Zitzengummikopf umgriffener Kopfraum 34 sichtbar, der in den vom Schlauchteil 4 umgriffenen Zitzenaufnahmeraum 36 übergeht. Die Zitze taucht durch eine Einführöffnung 37 in den Kopfraum 34 und den Zitzenaufnahmeraum 36 ein.

Die Einrichtung 32 zur Erfassung des Kopfvakuums im Ringraum zwischen der eingeführten Zitze und der Umfangswandung des Zitzengummikopfs ist beim dargestellten Ausführungsbeispiel als membranartiger Körper mit einer Membran 38 ausgebildet. Dieser Membrankörper ist in eine gestufte Aufnahme 40 der Kopfwandung eingesetzt, die nach außen hin eine Stützfläche 42 hat, an der die Membran 38 abgestützt und lagepositioniert ist.

Die Membran 38 ist an einem entsprechend der Aufnahme ausgebildeten, gestuften Grundkörper 44 ausgebildet, der von einer Druckaufnahmebohrung 46 durchsetzt ist, über die die Membran 38 mit dem Druck im Kopfraum 34 beaufschlagt ist. Die Steifigkeit der Membran 38 ist so gewählt, dass sie bei korrektem Kopfvakuum/Druck im Zitzengummikopf 2 eine Grundposition einnimmt, in der sie beispielsweise pilzartig ausgewölbt ist (Figur 2). In dem Fall, in dem das Kopfvakuum zu groß ist, mit anderen Worten gesagt, in dem Fall, in dem der Unterdruck im Kopfraum 34 den Grenzdruck unterschreitet, wölbt sich die Membran 38 gemäß der Darstellung in Figur 3 ein. Diese strukturelle Änderung ist von der Bedienperson sofort erfassbar, so dass bereits während des Melkvorgangs geeignete Maßnahmen getroffen werden können, um dieses zu hohe Kopfvakuum zu beseitigen. Beim dargestellten Ausführungsbeispiel ist die Einrichtung 32 aus Kunststoff hergestellt, wobei durch eine entsprechende Einfärbung dafür gesorgt werden kann, dass die strukturelle Änderung sofort erfassbar oder ertastbar ist. Dies wird dadurch unterstützt, dass die sich pilzartig auswölbende Membran 38 über die sonstige Außenkontur des Zitzengummikopfs 2 hinaus steht. Die Lagepositionierung des Membrankörpers ist durch den abgestuften Grundkörper 44 und die entsprechend ausgestaltete Aufnahme 40 gewährleistet, wobei die Montage sehr einfach ist, da der Membrankörper lediglich über ein geeignetes Werkzeug in die Aufnahme eingesetzt werden muss.

Bei den oben beschriebenen Ausführungsbeispielen ist die Einrichtung 32 im Bereich des größten Durchmessers ausgebildet. Prinzipiell ist auch vorstellbar, diese Einrichtung 32 etwas nach unten, das heißt hin zum Schlauchteil 4 zu versetzen, so dass sie nicht durch das Fell oder Hautfalten überdeckt wird und somit noch besser erkannt werden kann.

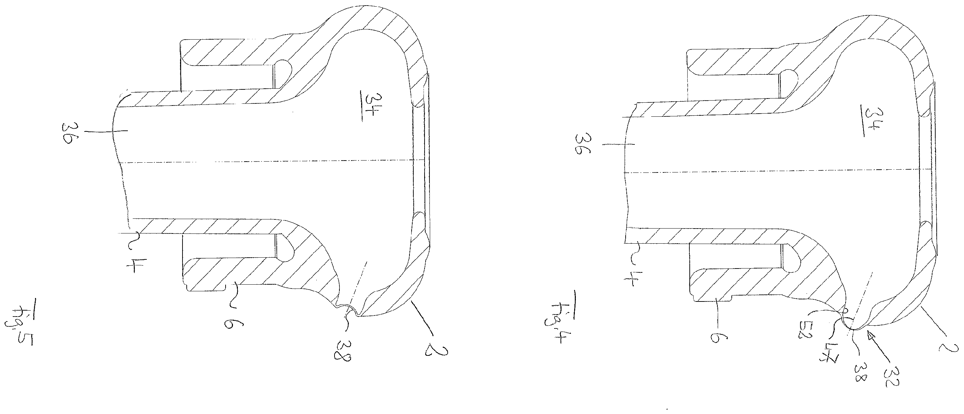

Beim Ausführungsbeispiel gemäß den Figuren 4 und 5 ist die Einrichtung 32 einstückig mit dem Zitzengummikopf 2 ausgebildet. Dabei ist die Kopfwandung im Bereich einer Achse 47 der Einrichtung 32 durch eine Ausnehmung 52 geschwächt, so dass eine die Membran 38 bildende, relativ dünne eigensteife Haut verbleibt, die sich in der Grundposition, das heißt bei korrektem Kopfvakuum nach außen über die Außenkontur des Zitzengummikopfs auswölbt. Die Kontur und die Wandstärke der Membran 38 sind so gewählt, dass sie sich bei Überschreiten des vorbestimmten Kopfdrucks gemäß Figur 5 einwölbt und somit der Bedienperson ein eindeutiges Signal gibt, dass das Kopfvakuum zu hoch ist.

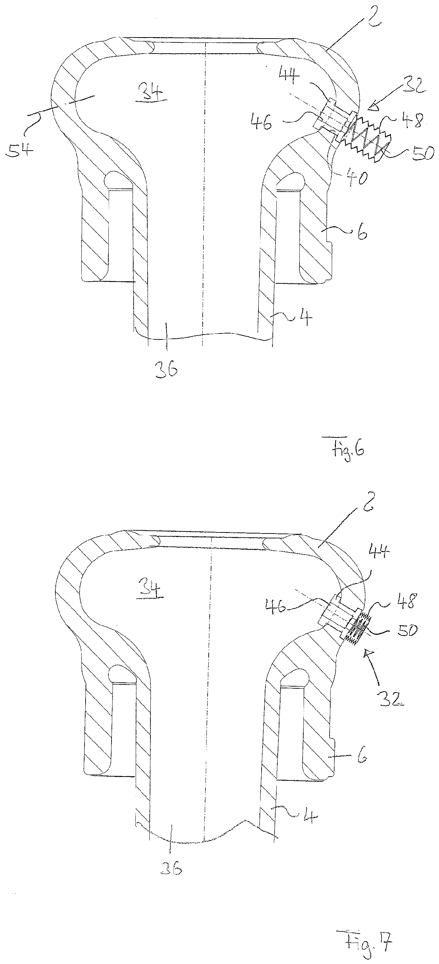

Selbstverständlich kann diese Einrichtung 32 auch auf andere Weise ausgebildet sein. Die Figuren 6 und 7 zeigen eine Variante, bei der die Einrichtung 32 mit einem Element ausgebildet ist, dessen Axiallänge sich bei einer unerwünschten Veränderung des Kopfvakuums ändert. Beim konkreten Ausführungsbeispiel hat die Einrichtung 32 einen Balg 48, der beispielsweise über ein Federelement 50 in die in Figur 6 dargestellte Grundposition vorgespannt ist, in der der Balg 48 über die Außenkontur des Zitzengummikopfs 2 hinaus steht. Der Balg 48 ist wiederum an einem gestuften Grundkörper 44 ausgebildet, der die Druckaufnahmebohrung 46 zur Erfassung des Kopfvakuums hat. Diese Druckaufnahmebohrung 46 ist mit dem Innenraum des Balgs 48 verbunden. Der Grundkörper 44 wird in eine entsprechend ausgebildete gestufte Aufnahme 40 der Kopfwandung eingesetzt. Das Federelement 50 stützt sich an der in Figur 6 rechten Stirnfläche des Grundkörpers 44 ab und spannt den Balg 48 in seine Grundposition vor. Bei Überschreiten des Kopfvakuums wird der Balg 48 gegen die Kraft des Federelements 50 gemäß der Darstellung in Figur 7 in seiner Axiallänge verkürzt - diese Verkürzung ist ebenfalls von der Bedienperson erfassbar.

Prinzipiell kann der Balg 48 an sich auch so ausgebildet werden, dass er eine hinreichende Federelastizität aufweist, so dass unter Umständen auf das zusätzliche Federelement 50 verzichtet werden kann. Sowohl der Balg 48 als auch das Federelement 50 können aus Kunststoff gefertigt sein.

Angedeutet in Figur 6 ist auch eine Kopfdüse 54, wie sie im eingangs beschriebenen Stand der Technik und in der nachveröffentlichten DE 10 2013 114 987 der Anmelder beschrieben ist. Diese Kopfdüse zur Belüftung des Kopfraums 34 kann ebenfalls so ausgebildet werden, dass sie bei einer Verstopfung und/oder einer Überschreitung des Kopfvakuums eine strukturelle Änderung der vorbeschriebenen Art durchführt, so dass ein Verstopfen der Kopfdüse 54 auf einfache Weise erfassbar ist. Hinsichtlich Einzelheiten dieser Kopfdüse 54 sei auf den genannten Stand der Technik verwiesen.

Prinzipiell ist es auch möglich, sowohl die Funktion der Kopfdüse 54 als auch die Funktion der Einrichtung 32 in ein Element zu integrieren, so dass die Montage vereinfacht ist.

Prinzipiell ist es auch möglich, über diese strukturelle Änderung einen elektrischen Signalkontakt zu schließen, so dass eine optische oder akustische Warnung abgegeben wird. Auch ein Farbumschlag aufgrund der strukturellen Änderung ist als Signal vorstellbar.

Offenbart ist ein Zitzengummi mit einem Zitzengummikopf, in dem eine Einrichtung vorgesehen ist, die während des Melkvorgangs beim Überschreiten eines Kopfvakuums eine strukturelle Änderung durchführt, die von außen her erfassbar ist.

### Bezugszeichen

- 1: Zitzengummi
- 2: Zitzengummikopf
- 4: Schlauchteil
- 6: Kopfmuffe
- 8: Spannwulst
- 10: Milchschlauch
- 12: Schrägabschluss
- 14: Dünnwandbereich
- 16: Rückwand
- 18: Massagewandung
- 20: Stabilisierungsleiste
- 22: Stabilisierungsleiste
- 24: Querrippe
- 26: Vertikalebene
- 28: Rückwandkante
- 30: Rückwandkante
- 32: Einrichtung
- 34: Kopfraum
- 36: Zitzenaufnahmeraum
- 37: Einführöffnung
- 38: Membran
- 40: Aufnahme
- 42: Stützfläche
- 44: Grundkörper
- 46: Druckaufnahmebohrung
- 47: Achse
- 48: Balg
- 50: Federelement
- 52: Ausnehmung
- 54: Kopfdüse

## Patentansprüche

1. Zitzengummi mit einem Schlauchteil (1) und einem Zitzengummikopf (2), der einen Kopfraum (34) begrenzt und in den eine Einrichtung (32) integriert ist, die derart ausgebildet ist, dass sie bei Überschreiten eines Grenzvakuums im Kopfraum (34) eine von außen erfassbare strukturelle Änderung erfährt, wobei die Einrichtung (32) ein membranartiges Element aufweist, das sich bei Überschreiten eines das Melkverfahren störenden zu hohen Grenzwertes eines Kopfvakuums einwölbt und das membranartige Element einstückig am Zitzengummikopf (2) ausgebildet ist oder als gesondertes Bauteil in den Zitzengummikopf (2) eingesetzt ist.

2. Zitzengummi nach Patentanspruch 1, wobei die strukturelle Änderung haptisch oder visuell erfassbar ist.

3. Zitzengummi nach Patentanspruch 1 oder 2, wobei sich die Membran bei Einstellung des richtigen Kopfvakuums wieder auswölbt.

4. Zitzengummi nach einem der vorhergehenden Patentansprüche, wobei die Einrichtung (32) im Bereich des größten Zitzengummikopfdurchmessers oder zum Schlauchteil (4) hin versetzt angeordnet ist.

5. Zitzengummi nach einem der vorhergehenden Patentansprüche, wobei die Einrichtung (32) über die Außenkonturen des Zitzengummikopfs (2) hinaus auskragt.

6. Zitzengummi nach einem der vorhergehenden Patentansprüche, mit einer Kopfdüse (54), die mit einem im Kopfraum (34) mündenden Belüftungskanal hydraulisch verbunden ist und die bei Verstopfung eine ähnliche strukturelle Änderung erfährt.

## Claims

1. Teat cup liner with a hose part (1) and a teat cup liner head (2) which limits a head space (34) and into a device (32) is integrated which is designed in such a way that it undergoes a structural change which can be detected from the outside when a threshold vacuum in the head space (34) is exceeded, wherein the device (32) comprises a membrane-like element which bulges inwards when an excessive limit value of a head vacuum which interferes with the milking process is exceeded, and the membrane-like element is integrally formed on the teat cup liner head (2) or is inserted as a separate component in the teat cup liner head (2).

2. Teat cup liner according to patent claim 1, wherein the structural change is haptically or visually detectable.

3. Teat cup liner according to patent claim 1 or 2, wherein the membrane bulges outwards again when the correct head vacuum is adjusted.

4. Teat cup liner according to one of the preceding patent claims, wherein the device (32) is offset in the region of the largest teat cup liner head diameter or towards the hose part (4).

5. Teat cup liner according to one of the preceding patent claims, wherein the device (32) protrudes over the outer contours of the teat cup liner head (2).

6. Teat cup liner according to one of the preceding patent claims, having a head nozzle (54) which is hydraulically connected to a ventilation channel opening into the head space (34) and which undergoes a similar structural change in the event of obstruction.

## Revendications

1. Manchon trayeur avec une partie tuyau (1) et une tête de manchon trayeur (2) qui délimite un espace de tête (34) et dans lequel est intégré un dispositif (32) qui est réalisé de telle sorte que, lors du dépassement d'un vide limite dans l'espace de tête (34), il subit une variation structurelle détectable de l'extérieur, dans lequel le dispositif (32) comporte un élément du type membrane qui se voûte vers l'intérieur lorsqu'un vide de tête dépasse une valeur limite trop grande perturbant le processus de traite et l'élément du type membrane est réalisé d'une seule pièce au niveau de la tête de manchon trayeur (2) ou est placé en tant que pièce séparée dans la tête de manchon trayeur (2).

2. Manchon trayeur selon la revendication 1, dans lequel la variation structurelle peut être détectée tactilement ou visuellement.

3. Manchon trayeur selon la revendication 1 ou 2, dans lequel la membrane se voûte à nouveau vers l'extérieur lors du réglage du vide de tête correct.

4. Manchon trayeur selon l'une quelconque des revendications précédentes, dans lequel le dispositif (32) est agencé dans la zone du plus grand diamètre de tête de manchon trayeur ou avec un décalage par rapport à la partie tuyau (4).

5. Manchon trayeur selon l'une quelconque des revendications précédentes, dans lequel le dispositif (32) fait saillie au-delà des contours extérieurs de la tête de manchon trayeur (2).

6. Manchon trayeur selon l'une quelconque des revendications précédentes, avec une buse de tête (54), qui est reliée au niveau hydraulique à un canal d'aération débouchant dans l'espace de tête (34) et qui subit une variation structurelle analogue en cas d'obstruction.
